(19) Europäisches Patentamt
European Patent Office
Office européen des brevets

(11) **EP 2 962 754 B1**

(12) **EUROPEAN PATENT SPECIFICATION**

(45) Date of publication and mention
of the grant of the patent:
**07.04.2021 Bulletin 2021/14**

(21) Application number: **13876420.4**

(22) Date of filing: **27.02.2013**

(51) Int Cl.:
**B01J 23/88** (2006.01)    **C01B 3/38** (2006.01)
**B01J 37/08** (2006.01)    **B01J 21/06** (2006.01)
**B01J 21/08** (2006.01)    **C07C 1/04** (2006.01)

(86) International application number:
**PCT/JP2013/055250**

(87) International publication number:
**WO 2014/132367 (04.09.2014 Gazette 2014/36)**

(54) **METHOD OF PRODUCING CO SHIFT CATALYST**

HERSTELLUNGSVERFAHREN EINES CO-KONVERTIERUNGSKATALYSATOR

PROCÉDÉ DE PRÉPARATION D'UN CATALYSEUR DE CONVERSION DU MONOXYDE DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.01.2016 Bulletin 2016/01**

(73) Proprietor: **Mitsubishi Heavy Industries Engineering, Ltd.**
**Yokohama-shi, Kanagawa 220-8401 (JP)**

(72) Inventors:
• **YONEMURA, Masanao**
  Tokyo 108-8215 (JP)
• **YASUTAKE, Toshinobu**
  Tokyo 108-8215 (JP)
• **SAWATA, Akihiro**
  Tokyo 108-8215 (JP)
• **SEIKI, Yoshio**
  Tokyo 108-8215 (JP)
• **TANAKA, Yukio**
  Tokyo 108-8215 (JP)
• **HIGASHINO, Koji**
  Tokyo 108-8215 (JP)
• **ABE, Hyota**
  Tokyo 108-8215 (JP)
• **YOSHIDA, Kaori**
  Tokyo 108-8215 (JP)

(74) Representative: **Henkel & Partner mbB**
**Patentanwaltskanzlei, Rechtsanwaltskanzlei**
**Maximiliansplatz 21**
**80333 München (DE)**

(56) References cited:
**EP-A1- 2 939 738**    **EP-A1- 2 939 739**
**EP-A1- 2 939 740**    **WO-A1-2011/105501**
**WO-A1-2011/105501**    **JP-A- H08 173 809**
**JP-A- H08 173 809**    **JP-A- 2004 331 701**
**JP-A- 2004 331 701**    **JP-A- 2006 511 427**
**JP-A- 2006 511 427**    **JP-A- 2008 155 181**
**JP-A- 2011 157 486**    **JP-A- 2011 157 486**
**JP-A- 2012 066 237**    **JP-A- 2012 066 237**
**US-A- 3 850 841**    **US-A1- 2012 294 789**

• **M. LANIECKI ET AL.: 'Water-gas shift reaction over sulfided molybdenum catalysts supported on Ti02-Zr02 mixed oxides, Support characterization and catalytic activity' CATALYSIS TODAY vol. 116, 2006, pages 400 - 407, XP027975859**
• **M. LANIECKI ET AL.: 'Water-gas shift reaction over sulfided molybdenum catalysts I. Alumina, titania and zirconia-supported catalysts' APPLIED CATALYSIS A: GENERAL vol. 196, 2000, pages 293 - 303, XP004272287**
• **M. LANIECKI: 'Ni-Mo-Y zeolites as catalysts for the water-gas shift reaction' STUDIES IN SURFACE SCIENCE AND CATALYSIS vol. 83, 1994, pages 363 - 370, XP008177764**

**(Cont. next page)**

- LANIECKI M ET AL: "Water-gas shift reaction over sulfided molybdenum catalysts - I. Alumina, titania and zirconia-supported catalysts", APPLIED CATALYSIS A: GENERAL, ELSEVIER, AMSTERDAM, NL, vol. 196, no. 2, 10 April 2000 (2000-04-10), pages 293-303, XP004272287, ISSN: 0926-860X, DOI: 10.1016/S0926-860X(99)00480-9
- LANIECKI M ED - TADASHI HATTORI ET AL: "Ni-Mo-Y zeolites as catalysts for the water-gas shift reaction", ZEOLITES AND MICROPOROUS CRYSTALS, PROCEEDINGS OF THE INTERNATIONAL SYMPOSIUM ON ZEOLITES AND MICROPOROUS CRYSTALS; NAGOYA, JAPAN; 22-28 AUGUST 1993 IN: STUDIES IN SURFACE SCIENCE AND CATALYSIS; ISSN 0167-2991; VOL. 83; [STUDIES IN SURFACE SCIENCE AN, vol. 83, 1 January 1994 (1994-01-01), pages 363-370, XP008177764, DOI: 10.1016/S0167-2991(08)63277-2 ISBN: 978-0-444-98657-3 [retrieved on 2008-04-15]

**Description**

Field

The present invention relates to a method of producing a CO shift catalyst for converting CO in gasified gas into $CO_2$.

Background

The efficient use of coal has attracted attention as one of trumps to solve a recent energy problem.

On the other hand, it is necessary to have an advanced technique such as a coal gasifying technique and a gas purifying technique in order to convert the coal as an energy medium with high added value.

An integrated coal gasification combined power generation system which generates power by using the gasified gas has been proposed (Patent Literature 1).

The integrated coal gasification combined power generation (Integrated coal Gasification Combined Cycle :IGCC) is a system for converting the coal into combustible gas by a high-temperature high-pressure gasification furnace and performing combined power generation by a gas turbine and a steam turbine using the gasified gas as a fuel.

For example, most of hydrocarbon compounds existing in coal gasified gas (produced gas) are carbon monoxide (CO), and carbon dioxide ($CO_2$) and hydrocarbon ($CH_4$ and CnHm) only account for a few percent. As a result, it is necessary to convert CO existing in the produced gas into $CO_2$ in order to recover $CO_2$. It has been proposed to convert CO into $CO_2$ by the following reaction by using the CO shift catalyst while adding water vapor ($H_2O$) (Patent Literature 2).

$$CO + H_2O \Leftrightarrow CO_2 + H_2 + 40.9 kJ/mol \text{ (exothermic reaction) (} \qquad 1)$$

According to the knowledge to relative to the shift reaction in the field of chemical industry before, by sufficiently increasing a water vapor adding ratio ($H_2 O/CO$) at a CO shift reactor inlet, the above-mentioned reaction of (1) is proceeded, and a desired CO→$CO_2$ conversion rate can be obtained.

Patent Literature 3 discloses a method of producing a highly active CO shift catalyst. The method comprises firing a metal oxide support and an active metallic component supported thereon at a temperature of 250 to 600°C, wherein the metal oxide support preferably includes a composite oxide such as $TiO_2$-$Al_2O_3$ and $ZrO_2$-$NiO$-$CoO$, and wherein the active metallic component preferably contains Ru as a main component and optionally a noble metal such as Pd or Re as an accessory component.

Patent Literature 4 describes a method of producing a CO shift catalyst in which deterioration is not great even when an amount of water vapor is small and CO shift reaction can be carried in a stable and efficient manner. The method comprises firing a support and an active component at a temperature of 500 to 800°C, wherein the support has an average pore size of 300 Å or more and consists of oxides of Ti, Zr and Ce, and wherein the active component includes one of Mo and Fe as a main component and one of Ni and Ru as an accessory component.

Patent Literature 5 teaches a method of producing a CO shift catalyst in which deterioration is not great even when an amount of water vapor is small and CO shift reaction can be carried in a stable and efficient manner. The method comprises firing a support, an active component and a promoter component at a temperature of 500°C, wherein the support includes one or more kinds of oxides of Ti, Zr and Ce, and wherein the active component includes one of Mo and Fe as a main component and one of Ni and Ru as an accessory component.

Patent Literature 6 discloses a method of producing a CO shift catalyst in which deterioration is not great even when an amount of water vapor is small and CO shift reaction can be carried in a stable and efficient manner. The method comprises firing a support and an active component at a temperature of 500°C, wherein the support includes a composite oxide of two or more kinds of elements selected from the group consisting of Ti, Zr, Ce, Si, Al and La, and wherein the active component includes one of Mo and Fe as a main component and one of Ni and Ru as an accessory component.

Patent Literature 7 describes a method of producing a CO shift catalyst which allows to efficiently prepare hydrogen from carbon monoxide and steam. The process comprises firing a support and an active component at a temperature of 538 to 657°C, wherein the active component includes (i) an alkali metal compound derived from an acid having an ionization constant of less than about $1 \times 10^{-3}$ and (ii) a hydrogenation-dehydrogenation component. The hydrogenation-dehydrogenation component preferably includes a mixture of Co and Mo.

Patent Literature 8 teaches a method of producing a CO shift catalyst which has high S resistance and can exert stable catalytic performance even when the concentration of $H_2S$ is low. The method comprises firing a support and an active component at a temperature of 500°C, wherein the support includes one or more oxides of Ti, Zr and Ce, and wherein the active component includes one of Mo and Fe as a main component and one of Ni and Ru as an accessory component. The support preferably includes a complex oxide comprising at least two of Ti, Zr and Ce.

EP 2 962 754 B1

Citation List

Patent Literature

Patent Literature 1: Japanese Patent Application Publication No. JP 2004-331701 A
Patent Literature 2: Japanese Patent Application Publication No. JP 2011-157486 A
Patent Literature 3: Japanese Patent Application Publication No. JP 2008-155181 A
Patent Literature 4: European Patent Application Publication No. EP 2 939 740 A1
Patent Literature 5: European Patent Application Publication No. EP 2 939 739 A1
Patent Literature 6: European Patent Application Publication No. EP 2 939 738 A1
Patent Literature 7: United States Patent Publication No. US 3,850,841 A
Patent Literature 8: United States Patent Application Publication No. US 2012/0294789 A1

Summary

Technical Problem

For example, a $Co-Mo/Al_2O_3$ catalyst is generally used as the CO shift catalyst. However, the $Co-Mo/Al_2O_3$ catalyst is activated in a high temperature region (for example, equal to or higher than 350°C). Therefore, a carbon (C) deposition is concerned.

Therefore, to prevent the C deposition, it has been necessary to add an excessive amount of water vapor (water vapor $(H_2O)/CO \geq 3$).

On the other hand, the IGCC plant including a $CO_2$ recovery facility is a power generation plant, and it is necessary to consider environment (reduce $CO_2$ emission). Also, it is necessary to focus on a plant power generation efficiency.

That is, for example, extraction medium pressure steam from a heat recovery steam generator (HRSG) is used as a water vapor adding source for water vapor adding ratio $(H_2 O/CO)$ while supplying it to a shift reactor. However, reduction in the amount of the extraction water vapor is an important factor to improve the plant efficiency. Therefore, to reduce the amount of the extraction water vapor from the heat recovery steam generator (HRSG) is required as much as possible in order to increase the power generation efficiency.

Therefore, the appearance of the CO shift catalyst is desired which can improve durability to the C deposition and can stably perform the CO shift conversion for a long time even when the supply amount of the water vapor has been largely reduced from "water vapor $(H_2O/CO) = 3$" to about "water vapor $(H_2O/CO) = 1$".

A purpose of the present invention is thus to provide a CO shift catalyst which can stably and efficiently perform CO shift reaction and which is not drastically deteriorated even when the amount of the water vapor is small. The invention is defined by the claims. Solution to Problem

The above problem is solved by a production method as defined in claim 1. The method produces a CO shift catalyst which reforms carbon monoxide (CO) in gas, the CO shift catalyst comprising:

(a) an active ingredient including one of molybdenum (Mo) and iron (Fe) in an amount of 0.1 to 25 percent by weight as a main component, and one of nickel (Ni) and ruthenium (Ru) in an amount of 0.01 to 10 percent by weight as an accessory component, and

(b) a complex oxide including two or more kinds from among titanium (Ti), zirconium (Zr) and aluminum (Al) as a support for supporting the active ingredient,

wherein the method comprises firing the complex oxide and the active ingredient at a high temperature equal to or higher than 550°C and equal to or lower than 850°C.

Advantageous Effects of Invention

The CO shift catalyst produced by the method according to the present invention has a large average pore diameter. Therefore, even when the carbon (C) deposition occurs, the CO shift catalyst has an effect to have an excellent durability and to stably maintain the CO shift reaction for a long time.

4

Brief Description of Drawings

FIG. 1 is a schematic diagram of a gasified gas purifying system including a CO shift reaction apparatus in which a CO shift catalyst produced by the method according to the present invention has been filled.
FIG. 2 is a diagram of an exemplary coal gasification power generation plant.

Description of Embodiments

The present invention will be described in detail below with reference to the drawings. The present invention is not limited to the embodiment below, but is defined by the claims. In addition, the components disclosed in the embodiment below can be appropriately combined with each other.

Embodiment

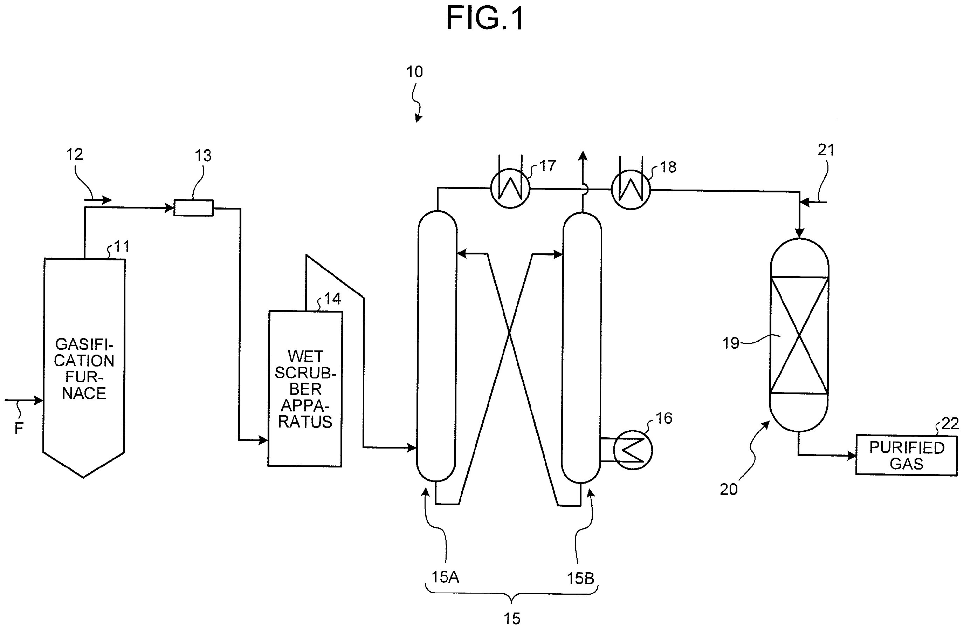

A CO shift catalyst produced by the method according to the present invention and a CO shift reaction apparatus using the same will be described with reference to the drawings. FIG. 1 is a schematic diagram of a gasified gas purifying system including the CO shift reaction apparatus in which the CO shift catalyst has been filled.

As illustrated in FIG. 1, a gasified gas purifying system 10 includes a gasification furnace 11 for gasifying coal which is a fuel F, a filter 13 for removing smoke and dust in gasified gas 12 which is produced gas, a wet scrubber apparatus 14 for removing halogen in the gasified gas 12 which has passed through the filter 13, a gas purifying apparatus 15, a first heat exchanger 17 and a second heat exchanger 18 which increase the temperature of the gasified gas 12, a CO shift reaction apparatus 20 including a CO shift catalyst 19 for converting CO in the gasified gas 12 of which the temperature is increased at, for example, 300°C into $CO_2$ and making it to be purified gas 22. The gas purifying apparatus 15 includes an absorber 15A for absorbing and removing $CO_2$ and $H_2S$ in the heat-exchanged gasified gas 12 and a regenerator 15B for regenerating them. Also, the gas purifying apparatus 15 has a regeneration superheater 16 on a side of the regenerator 15B. A reference sign 21 indicates water vapor in FIG. 1.

In the gasification furnace 11, the coal which is the fuel F has contact with a gasification agent such as air and oxygen so that the coal is burned and gasified. Accordingly, the gasified gas 12 is generated. The gasified gas 12 generated in the gasification furnace 11 has carbon monoxide (CO), hydrogen ($H_2$), and carbon dioxide ($CO_2$) as main components. However, a small amount of an element included in the coal (for example, a halogen compound and a heavy metal such as mercury (Hg)) and a small amount of an unburned compound at the time of coal gasification (for example, polycyclic aromatic such as phenol and anthracene, cyanogen, and ammonia) are included.

The gasified gas 12 generated in the gasification furnace 11 is introduced from the gasification furnace 11 to the filter 13. In the gasified gas 12 introduced to the filter 13, smoke and dust are removed from the gasified gas 12. A cyclone, an electrostatic precipitator (EP), and the like may be used other than the filter.

After the filter 13 has removed smoke and dust, the gasified gas 12 is purified by the gas purifying apparatus 15. After that, the temperature of the gasified gas 12 is increased by the first and second heat exchangers 17 and 18.

Subsequently, after the water vapor 21 has been supplied by a water vapor supplying apparatus (water vapor supplying unit), the water vapor 21 is introduced to the CO shift reaction apparatus 20 having the CO shift catalyst 19. The CO shift reaction apparatus 20 reforms carbon monoxide (CO) in the gasified gas 12 and converts it into carbon dioxide ($CO_2$) under the CO shift catalyst 19.

The CO shift catalyst 19 produced by the method according to the present invention is a CO shift catalyst for reforming carbon monoxide (CO) in the gasified gas, and has an active ingredient including one of molybdenum (Mo) and iron (Fe) as a main component and one of nickel (Ni) and ruthenium (Ru) as an accessory component. At the same time, the CO shift catalyst 19 has a complex oxide including two or more kinds from among titanium (Ti), zirconium (Zr) and aluminum (Al) as a support for supporting the active ingredient. The CO shift catalyst 19 is formed by firing them at a high temperature of equal to or more than 550°C, and preferably equal to or more than 600°C.

As an exemplary complex oxide of the support, $TiO_2$-$ZrO_2$, $TiO_2$-$Al_2O_3$ and $ZrO_2$-$Al_2O_3$ are used.

Also, the firing temperature of the support is of 500°C which is the normal firing temperature to equal to or higher than 550°C, and more preferably, equal to or higher than 600°C, More preferably, the firing at a high temperature which is equal to or higher than 700°C is performed for a predetermined time.

The upper limit of the firing temperature is equal to or lower than 850°C. At 850°C, a crystal structure of the support is changed from an anatase type to a rutile type.

Also, it is preferable that the firing time be at least equal to or longer than one hour and preferably equal to or longer than two hours. More preferably, it is preferable that the firing time be equal to or longer than three hours.

In the present invention, the temperature of the catalyst firing is equal to or higher than 550°C that is higher than the normal temperature of 500°C. Therefore, when the CO shift catalyst produced by the method according to the present invention is used, an initial CO conversion rate becomes slightly smaller than that of the catalyst fired at 500°C. However, for example, the CO conversion rate after a hundred-hour durability test becomes higher than that of the catalyst fired at 500°C. The CO conversion rate after a hundred-hour durability test becomes higher because a carbon production reaction can be prevented due to the reduction in a specific surface area by firing at the high temperature.

Here, a support amount of molybdenum (Mo) or iron (Fe) which is the main component is 0.1 to 25 percent by weight, and preferably 7 to 20 percent by weight. A support amount of nickel (Ni) or ruthenium (Ru) which is the accessory component is 0.01 to 10 percent by weight, and preferably 2 to 10 percent by weight.

In this way, according to the CO shift catalyst 19 produced by the method according to the present invention, a CO shift conversion can be stably performed for a long time. Also, the amount of the water vapor to be supplied is reduced, and an efficient gas purifying process can be provided.

[Example of test]

An example of a test indicating an effect of the present invention will be described below.

1) Manufacturing method for test catalyst 1 (not according to the invention)

After a Ti source which is $TiOSO_4$ of 320.2 g has been mixed with water of 1441.8 g at a normal temperature, "SNOWTEX® O (product name)" (silica sol, $SiO_2$ = 20 wt. %) of 200 g manufactured by Nissan Chemical Industries, Ltd. is mixed. After that, $NH_4OH$ having 9 vol. % is slowly dripped, and pH in the mixed liquid is made to be seven. Then, a deposit is generated, and the mixed liquid is stirred for two more hours and matured. After being filtered and sufficiently cleaned, the deposit obtained after maturing is dried and fired (for five hours at 500°C). Accordingly, the support is obtained.

Relative to the support, NiO and $MoO_3$ are added so that four percent by weight of NiO and 14 percent by weight of $MoO_3$ are supported relative to an amount of all powders which are finally obtained. After that, they are evaporated, dried, and impregnated on a ceramic dish. Then, after the obtained powder has been completely dried by a dryer, the powder catalyst is obtained by firing the obtained powder at 550°C for three hours (temperature rising speed 100°C/h).

After the powder of the obtained powder catalyst has been fixed by a pressure molding apparatus of 30 ton, the powder is crushed so that the particle size becomes within a range of a predetermined particle size (for example, 2 to 4 mm) and sieved. Accordingly, a test catalyst 1 is obtained.

Also, after the powder is dried as mentioned above, the powder catalyst is obtained by firing at 600°C, 700°C, and then, 800°C. After that, an operation similar to that for manufacturing the test catalyst 1 is performed, and the test catalyst 1 having a different firing temperature is obtained.

2) Manufacturing method for test catalyst 2

In the manufacture for the test catalyst 1, $ZrOCl_2$ corresponding to 40 g in terms of $ZrO_2$ is used instead of a $SiO_2$ source as the support. Other than that, the operation similar to that for manufacturing the test catalyst 1 is performed, and accordingly, the test catalyst 2 is obtained.

3) Manufacturing method for test catalyst 3

In the manufacture for the test catalyst 1, $Al(NO_3)_3 \cdot 9H_2O$ corresponding to 40 g in terms of $Al_2O_3$ is used instead of the $SiO_2$ source as the support. Other than that, the operation similar to that for manufacturing the test catalyst 1 is performed, and accordingly, the test catalyst 3 is obtained.

4) Manufacturing method for comparison catalysts 1 to 3

In the test catalysts 1 to 3, the firing temperature of the support is assumed to be 500°C. Other than that, the comparison catalysts 1 to 3 are obtained by similarly performing the operation.

The catalyst is evaluated as follows.

Regarding the evaluation test, the catalyst of 3.3 cc is filled in a tubular reaction tube, and a catalytic activity is evaluated by a circulation type micro-reactor apparatus. The inside diameter of the tubular reaction tube is 14 mm.

The initial catalytic activity is compared by obtaining the CO conversion rates of gas flow rate change of an inlet and outlet of a catalyst layer.

The initial activity evaluation condition and the activity evaluation condition after durability are as follows.

The test is performed under the condition of 0.9 MPa, the temperature 250°C, SV = 6, 000h$^{-1}$ while assuming that a gas composition be $H_2$/CO/$CO_2$ = 30/50/20 mole percent, $H_2S$ = 700 ppm, and S/CO = 1.0.

The CO conversion rate is obtained according to the following formula (I).

```
CO conversion rate (%) = (1 - (CO gas flow velocity at
outlet of catalyst layer (mol/time))/(CO gas flow velocity
at inlet of catalyst layer (mol/time))) × 100···(I)
```

Also, the durability (acceleration) test is performed under the condition below.

The test is performed under the condition that 0.9 MPa, the temperature 450°C, SV = 2, and 000h$^{-1}$ while assuming that a gas composition be $H_2$/CO/$CO_2$ = 30/50/20 mole percent, $H_2S$ = 700 ppm, and S/CO = 0.1.

A list of the composition of the catalyst and the result of the test are illustrated in Table 1.

[Table 1]

| | ACTIVE INGREDIENT | | | | SUP-PORT | WEIGHT RATIO | FIRING TEM-PERATURE (°C×3h) | AVERAGE PORE DI-AMETER (Å) | INITIAL SPECIF-IC SUR-FACE AREA (m$^2$/g) | INITIAL CO CONVER-SION RATE (%) | CO CON-VERSION RATE AFTER 100 H DURA-BILITY (%) | C DEPOSI-TION AMOUNT (wt%) | RATIO OF CO CONVERSION RATE AFTER 100 H DURA-BILITY RELA-TIVE TO INI-TIAL CO CONVER-SION RATE (%) |
|---|---|---|---|---|---|---|---|---|---|---|---|---|---|
| | METAL | SUP-PORT AMOUNT (wt%) | METAL | SUP-PORT AMOUNT (wt%) | | | | | | | | | |
| TEST CATA-LYST 1* | Mo | 14 | Ni | 4 | TiO$_2$-SiO$_2$ | 80:20 | 550 | 72 | 118 | 81.8 | 64 | 0.79 | 78 |
| | | | | | | | 600 | 79 | 109 | 81.6 | 63.9 | 0.81 | 78 |
| | | | | | | | 700 | 92 | 91 | 80.8 | 64.2 | 0.83 | 79 |
| | | | | | | | 800 | 110 | 80 | 79.6 | 63.8 | 0.95 | 80 |
| TEST CATA-LYST 2 | ↑ | ↑ | ↑ | ↑ | TiO$_2$-ZrO$_2$ | 80:20 | 550 | 161 | 115 | 83.2 | 65.7 | 0.79 | 79 |
| | | | | | | | 600 | 178 | 106 | 82.0 | 63.8 | 0.81 | 78 |
| | | | | | | | 700 | 225 | 94 | 80.9 | 62.7 | 0.81 | 78 |
| | | | | | | | 800 | 250 | 86 | 79.9 | 62.6 | 0.93 | 78 |
| TEST CATA-LYST 3 | ↑ | ↑ | ↑ | ↑ | TiO$_2$-Al$_2$O$_3$ | 80:20 | 550 | 186 | 111 | 82.3 | 65.4 | 0.8 | 79 |
| | | | | | | | 600 | 192 | 101 | 81.6 | 64.1 | 0.83 | 79 |
| | | | | | | | 700 | 201 | 89 | 80.2 | 63.7 | 0.87 | 79 |
| | | | | | | | 800 | 163 | 78 | 78.2 | 62.2 | 0.97 | 80 |
| COMPARI-SON CATA-LYST 1 | ↑ | ↑ | ↑ | ↑ | TiO$_2$-SiO$_2$ | 80:20 | 500 | 79 | 121 | 83.8 | 62.9 | 1.15 | 75 |
| COMPARI-SON CATA-LYST 2 | ↑ | ↑ | ↑ | ↑ | TiO$_2$-ZrO$_2$ | 80:20 | 500 | 78 | 118 | 82.9 | 59.7 | 1.21 | 72 |

(continued)

| | ACTIVE INGREDIENT | | | | | | FIRING TEMPERATURE (°C×3h) | AVERAGE PORE DIAMETER (Å) | INITIAL SPECIFIC SURFACE AREA (m²/g) | INITIAL CO CONVERSION RATE (%) | CO CONVERSION RATE AFTER 100 H DURABILITY (%) | C DEPOSITION AMOUNT (wt%) | RATIO OF CO CONVERSION RATE AFTER 100 H DURABILITY RELATIVE TO INITIAL CO CONVERSION RATE (%) |
| | METAL | SUPPORT AMOUNT (wt%) | METAL | SUPPORT AMOUNT (wt%) | SUPPORT | WEIGHT RATIO | | | | | | | |
|---|---|---|---|---|---|---|---|---|---|---|---|---|---|
| COMPARISON CATALYST 3 | ← | ← | ← | ← | $TiO_2$-$Al_2O_3$ | 80:20 | 500 | 81 | 112 | 81.7 | 63.2 | 1.18 | 77 |

* (not according to the invention)

9

As illustrated in Table 1, it has been confirmed that the catalysts 1 to 3 according to the example of the test have small reduction in the CO conversion rates after the hundred-hour durability test and that the CO shift reaction is excellently maintained at each high firing temperature.

Also, since the carbon production reaction can be prevented by decreasing the specific surface area by firing at the high temperature, the high CO conversion rate after the hundred-hour durability test can be maintained.

Therefore, the CO shift catalyst according to the test has the complex oxide as the support, and the temperature of firing the support is a high temperature equal to or higher than 600°C. Accordingly, it has been found that the CO shift catalyst has an excellent durability and the CO shift reaction can be stably maintained for a long time even in a case where a carbon (C) deposition occurs.

As described above, the specific surface area is reduced by firing at the high temperature as in the present invention. As a result, the carbon production reaction can be prevented.

<Coal gasification power generation plant>

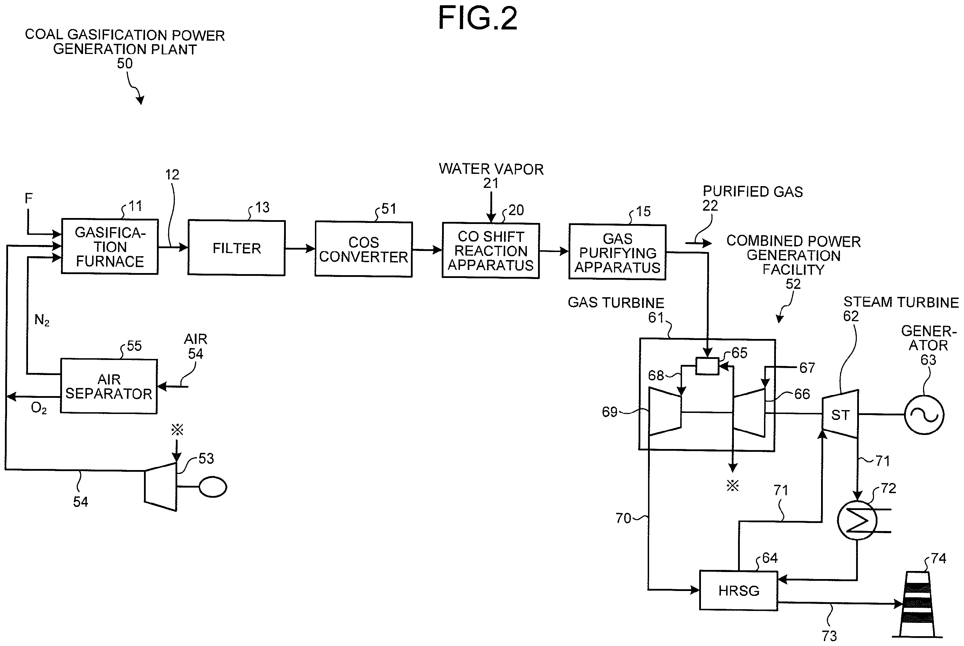

A coal gasification power generation plant having the CO shift reaction apparatus 20 will be described with reference to the drawing. FIG. 2 is a diagram of an exemplary coal gasification power generation plant. As illustrated in FIG. 2, a coal gasification power generation plant 50 includes a gasification furnace 11, a filter 13, a COS converter 51, the CO shift reaction apparatus 20, a gas purifying apparatus ($H_2S/CO_2$ recovery unit) 15, and a combined power generation facility 52.

The coal which is a fuel F and air 54 from a gasified air compressor 53 are supplied to the gasification furnace 11, and the coal is gasified by the gasification furnace 11. Then, the gasified gas 12 which is produced gas is obtained. Also, an air separator 55 separates the air 54 into nitrogen ($N_2$) and oxygen ($O_2$), and $N_2$ and $O_2$ are appropriately supplied into the gasification furnace 11. The coal gasification power generation plant 50 supplies the gasified gas 12 obtained by the gasification furnace 11 to the filter 13 and removes dust from the gasified gas 12. After that, the coal gasification power generation plant 50 supplies the gasified gas 12 to the COS converter 51 and converts COS included in the gasified gas 12 into $H_2S$.

After that, the gasified gas 12 including $H_2S$ is supplied to the CO shift reaction apparatus 20, and the water vapor 21 is supplied into the CO shift reaction apparatus 20. A CO shift reaction for converting CO in the gasified gas 12 into $CO_2$ in the CO shift reaction apparatus 20 is caused.

The CO shift reaction apparatus 20 uses the CO shift catalyst 19 produced by the method according to the present invention. Therefore, even when the amount of the water vapor is largely reduced as described above, reformed gas can be efficiently generated for a long time.

After the CO shift reaction apparatus 20 has converted CO in the gasified gas 12 into $CO_2$, the obtained reformed gas is supplied to the $H_2S/CO_2$ recovery unit which is the gas purifying apparatus 15. Then, the $H_2S/CO_2$ recovery unit removes $CO_2$ and $H_2S$ in the reformed gas.

The purified gas 22 after purified by the gas purifying apparatus 15 is supplied to the combined power generation facility 52. The combined power generation facility 52 includes a gas turbine 61, a steam turbine 62, a generator 63, and a heat recovery steam generator (HRSG) 64. The combined power generation facility 52 supplies the purified gas 22 to a combustor 65 of the gas turbine 61 which is a power generating unit. Also, the gas turbine 61 supplies air 67, which is supplied to the compressor 66, to the combustor 65. The gas turbine 61 generates high-temperature and high-pressure combustion gas 68 by combusting the purified gas 22 by the combustor 65 and drives a turbine 69 by the combustion gas 68. The turbine 69 is coupled to the generator 63, and the generator 63 generates the power by driving the turbine 69. Since flue gas 70 after the turbine 69 has been driven has the temperature of 500 to 600°C, the flue gas 70 is sent to the heat recovery steam generator (HRSG) 64, and heat energy is recovered. The heat recovery steam generator (HRSG) 64 generates steam 71 by the heat energy of the flue gas 70, and the steam turbine 62 is driven by the steam 71. After being used by the steam turbine 62, the steam 71 is discharged from the steam turbine 62 and cooled by the heat exchanger 72. After that, the steam 71 is supplied to the heat recovery steam generator 64. Also, after NOx and the like in the flue gas 73 has been removed by a denitration apparatus (not illustrated) and the like, the flue gas 73 of which the heat energy is recovered by the heat recovery steam generator 64 is discharged into the atmosphere via a stack 74.

In this way, the coal gasification power generation plant 50 having the CO shift reaction apparatus 20 converts CO included in the gasified gas 12 gasified by the gasification furnace 11 into $CO_2$ while preventing the deterioration of the CO shift catalyst even when the amount of the water vapor is reduced (water vapor (H2O/CO) = about 1) in the CO shift reaction apparatus 20. Then, the CO shift reaction of the reformed gas can be stably performed for a long time.

Accordingly, regarding the CO shift reaction, the CO shift reaction can be stably continued with small amount of water vapor. Therefore, the amount of the water vapor to be extracted from the HRSG 64 can be reduced, and the coal gasification power generation plant 50 can be operated with an improved energy efficiency.

The CO shift reaction apparatus 20 is not limited to be placed between the COS converter 51 and the gas

purifying apparatus (H$_2$S/CO$_2$ recovery unit) 15 (on the front stream side of H$_2$S/CO$_2$ recovery unit) and may be placed on the back stream side of the gas purifying apparatus (H$_2$S/CO$_2$ recovery unit) 15.

Also, a case has been described in which the purified gas 22 discharged from the gas purifying apparatus (H$_2$S/CO$_2$ recovery unit) 15 is used as gas for the turbine. However, since the CO shift reaction apparatus 20 converts a large amount of CO included in the gasified gas 12 into CO$_2$, the purified gas 22 may be used as material gas used to synthesize a chemical product such as methanol and ammonia other than the gas for the turbine.

In the above, a case has been described in which the CO shift reaction apparatus 20 converts CO in the gasified gas 12 generated by gasifying the fuel F such as coal by the gasification furnace 11 into CO$_2$. However, the CO shift catalyst produced by the method according to the present invention can be similarly applied to a CO shift reaction apparatus which converts gas including CO into CO$_2$ in a fuel cell and the like.

Reference Signs List

| 10 | gasified gas purifying system |
| 11 | gasification furnace |
| 12 | gasified gas |
| 13 | filter |
| 14 | wet scrubber apparatus |
| 15A | absorber |
| 15B | regenerator |
| 15 | gas purifying apparatus |
| 19 | CO shift catalyst |
| 20 | CO shift reaction apparatus |
| 21 | water vapor |
| 22 | purified gas |

## Claims

1. A method of producing a CO shift catalyst which reforms carbon monoxide (CO) in gas, the CO shift catalyst comprising:

    (a) an active ingredient including one of molybdenum (Mo) and iron (Fe) in an amount of 0.1 to 25 percent by weight as a main component, and one of nickel (Ni) and ruthenium (Ru) in an amount of 0.01 to 10 percent by weight as an accessory component, and
    (b) a complex oxide including two or more kinds from among titanium (Ti), zirconium (Zr) and aluminum (Al) as a support for supporting the active ingredient,

    **characterized in that** the method comprises firing the complex oxide and the active ingredient at a temperature equal to or higher than 550°C and equal to or lower than 850°C.

## Patentansprüche

1. Verfahren zur Herstellung eines CO-Shift-Katalysators, welcher eine Reformation von in Gas enthaltenem Kohlenmonoxid (CO) bewirkt, wobei der CO-Shift-Katalysator umfasst:

    (a) einen aktiven Bestandteil, welcher eines ausgewählt aus Molybdän (Mo) und Eisen (Fe) in einer Menge von 0.1 bis 25 Gewichtsprozent als Hauptkomponente und eines ausgewählt aus Nickel (Ni) und Ruthenium (Ru) in einer Menge von 0.01 bis 10 Gewichtsprozent als Nebenkomponente umfasst, und
    (b) ein komplexes Oxid, welches zwei oder mehr Arten ausgewählt aus Titan (Ti), Zirkonium (Zr) und Aluminium (Al) als Träger zum Trägern des aktiven Bestandteils umfasst,

    **dadurch gekennzeichnet, dass** das Verfahren das Brennen des komplexen Oxids und des aktiven Bestandteils bei einer Temperatur von gleich oder mehr als 550°C und gleich oder weniger als 850°C umfasst.

**Revendications**

1. Procédé pour produire un catalyseur de conversion de CO qui convertit le monoxyde de carbone (CO) en gaz, le catalyseur de conversion de CO comprenant :

   (a) un ingrédient actif comprenant, en tant que composant principal, l'un parmi le molybdène (Mo) et le fer (Fe) en une quantité de 0,1 à 25 % en poids, et, en tant que composant accessoire, l'un parmi le nickel (Ni) et le ruthénium (Ru) en une quantité de 0,01 à 10 % en poids, et
   (b) un oxyde complexe comprenant, en tant que support pour supporter l'ingrédient actif, deux types ou plus parmi le titane (Ti), le zirconium (Zr) et l'aluminium (Al),

   **caractérisé en ce que** le procédé comprend la cuisson de l'oxyde complexe et de l'ingrédient actif à une température égale ou supérieure à 550°C et égale ou inférieure à 850°C.

FIG.1

# FIG.2

COAL GASIFICATION POWER GENERATION PLANT 50

EP 2 962 754 B1

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004331701 A
- JP 2011157486 A
- JP 2008155181 A
- EP 2939740 A1
- EP 2939739 A1
- EP 2939738 A1
- US 3850841 A
- US 20120294789 A1